# EUROPEAN PATENT SPECIFICATION

(11) **EP 3 357 873 B1**
(45) Date of publication and mention of the grant of the patent: **06.11.2019**
(21) Application number: 15905514.4
(22) Date of filing: 28.09.2015
(51) Int. Cl.: C02F 9/08, C02F 1/22, C02F 1/26, C02F 1/38, B01D 11/00

(54) **A METHOD OF RECOVERY OF ORGANIC SUBSTANCES FROM AQUEOUS MEDIA BY FREEZE-OUT EXTRACTION UNDER THE ACTION OF A CENTRIFUGAL FORCE**
VERFAHREN ZUR RÜCKGEWINNUNG VON ORGANISCHEN SUBSTANZEN AUS WÄSSRIGEN MEDIEN DURCH AUSFRIEREN UNTER EINWIRKUNG EINER ZENTRIFUGALKRAFT
PROCÉDÉ D'EXTRACTION DE SUBSTANCES ORGANIQUES DE MILIEUX AQUEUX PAR EXTRACTION PAR CONGÉLATION DANS U CHAMP DE FORCES CENTRIFUGES

(43) Date of publication of application: 08.08.2018
(73) Proprietor: Bekhterev, Viktor Nikolaevich, Sochi 354024 (RU)
(72) Inventor: Bekhterev, Viktor Nikolaevich, Sochi 354024 (RU)
(74) Representative: Jeck, Anton
(86) International application number: PCT/RU2015/000615
(87) International publication number: WO 2017/058040

(56) References cited:
- JP-A- S6 068 003
- JP-A- S62 135 437
- RU-C1- 2 235 581
- RU-C2- 2 303 476
- YOSHIDA M ET AL: "Subzero-Temperature Liquid-Liquid Extraction of Benzodiazepines for High-Performance Liquid Chromatography", ANALYTICAL CHEMISTRY, AMERICAN CHEMICAL SOCIETY, US, vol. 71, no. 9, 1 May 1999 (1999-05-01), pages 1918-1921, XP002603048, ISSN: 0003-2700, DOI: 10.1021/AC981276G [retrieved on 1999-03-13]
- V. N. BEKHTEREV ET AL: "The determination of pyrovaleron in the urine by gas chromatography in the combination with the method of extractive chilling-out and centrifugation", SUDEBNO-MEDICINSKA? ?KSPERTIZA, vol. 60, no. 3, 1 January 2017 (2017-01-01), page 27, XP055488638, RU ISSN: 0039-4521, DOI: 10.17116/sudmed201760327-31
- BEKHTEREV V N: "Freeze-out extraction of monocarboxylic acids from water into acetonitrile under the action of centrifugal forces", RUSSIAN JOURNAL OF PHYSICAL CHEMISTRY A, CHEMICAL SOCIETY, LONDON, GB, vol. 90, no. 10, 18 September 2016 (2016-09-18), pages 2055-2059, XP036058381, ISSN: 0036-0244, DOI: 10.1134/S0036024416100046 [retrieved on 2016-09-18]
- LEITE V .: 'Opredelenie organicheskikh zagriaznenii pitevykh, prirodnykh i stochnykh vod' M., KHIMIIA 1975, page 37, XP009504895
- Manabu Yoshida ET AL: "Extraction of Thiamylal in Serum Using Hydrophilic Acetonitrile with Subzero-Temperature and Salting-Out Methods", Analytical Chemistry, vol. 76, no. 16, 1 August 2004 (2004-08-01), pages 4672-4675, XP055582290, US ISSN: 0003-2700, DOI: 10.1021/ac040065a
- BEKHTEREV ET AL: "Extractive freezing-out in the determination of organic compounds in aqueous media", MENDELEEV COMMUNICATIONS, INSTITUTE OF PHYSICS PUBLISHING, BRISTOL, GB, vol. 17, no. 4, 12 July 2007 (2007-07-12), pages 241-243, XP022151770, ISSN: 0959-9436

## Description

The invention relates to analytical chemistry, hydrochemistry, biochemistry, ecology, cryomedicine, forensic science and may be used for isolating both natural and synthetic, technogenic compounds from aqueous media, water-containing biological fluids (urine, blood etc.) and aqueous extracts/infusions of various objects.

A method of isolating organic substances is known that combines extraction and freezing out [1]. Dissolved organic compounds, target organic substances are isolated from water, water-containing fluids and aqueous extracts of various objects by means of initial addition of a soluble or partially soluble organic extractant (acetonitrile, acetone, dimethyl ether) into an amount of a sample and subsequent cooling of the prepared solution until the aqueous part crystallizes. As a result, extractable organic substances are transferred to the added organic solvent which is isolated into a separate liquid phase. The resulting liquid organic extract with target components is separated from the frozen part of the sample. As a consequence, this method was named "extractive freezing-out" [2-3]. Depending on the conditions of conduction of the method, the target components can also be concentrated in the solid phase of the ice [4].
Yoshida M et. al. "subzero-Temperature Liquid-Liquid Extraction of Benzodiazepines from High-Performance Liquid chromatography" discloses a low temperature extraction of organic compounds into an aqueous phase by liquid- liquid separation.

However, the method indicated [1] has a number of serious disadvantages:
- Despite conditions being identical, the mass of produced liquid extracts varies considerably, even in parallel measurements/experiments [2-3].
- A reduction in the temperature of the extractive freezing-out is accompanied by a steep reduction in the amount of extract as a result of retraction of a significant part of it into the cracks which form during crystallization of the ice, due to the capillary strength, until complete absence [4, 5];
- The degree of concentration of the components extracted usually does not exceed 3 ÷ 4 times, since the portion of extractant added cannot be reduced to below 25% [3] due to the existing losses of extractant in the form of liquid microin-clusions in the crystallized phase, but also on account of the retraction of a significant part of it into the cracks of the ice, which form during crystallization, due to the capillary forces [4].

The objective of the method proposed was an improvement in the reproducibility of the results of extraction with respect to the amount of extract produced, a reduction of the amount of extractant in the extraction system and the water content in the extract produced, and an improvement in the economic indicators.

This is achieved by the target organic substances being extracted from water-containing media with the aid of extractive freezing-out (EF) under the action of centrifugal trifugal force. Specifically, after the initial addition into the sample of an aqueous solution, a water-containing biological fluid and an aqueous extract of various objects of the organic extractant, including soluble or partially soluble (acetonitrile, acetone, dimethyl ether, ethyl acetate, etc.) crystallization of the aqueous part is carried out by means of cooling of the mixture under conditions of centrifugal force, i.e. under the action of centrifugal force's field. Due to the action of the centrifugal force under compression and differences in density of the contacting phases, including water, extractant, soluble gases, the solid phase (its granulometric composition), hydrodynamic factors, the viscosity of the fluids, gaseous components and so on, as well as vibration, a more homogeneous structure of the crystallized aqueous phase can be achieved during freezing. A consequence of this is significant growth in the mass (volume) of the extract produced as a result of the proposed new extraction method in comparison with the EF procedure without centrifugation, but also a steep increase in the reproducibility of the results of the extraction (mass of extract produced, content of the target component). A reduction in the temperature when carrying out EF is advantageous from the point of view of a reduction in the water content in the extract produced due to a reduction in its solubility by an organic solvent used as an extractant. Firstly, this reduces the volume of extractant produced and increases the coefficient (degree) of concentration of the target component, and secondly, it is an important condition of maintaining the efficiency and physical-chemical characteristics of the separation column during gas chromatographic analysis of the sample. Moreover, in a chemical analysis, a situation also often arises in which the presence of water in the extracts is not desirable. At the same time, due to the heterogeneity of the crystallized phase of the ice, a point can be reached when practically the entire extract retracts into its cracks. The proposed method solves this problem, as confirmed by the experiments below.

The examples provided below demonstrate the possibility of using various solvents for extracting organic substances of various classes, as well as variance in the conditions of the extractive freezing-out in the centrifugal field, including temperature and strength of the centrifugal field through change in the rotation speed of the centrifugal rotor. The given parameters are important for optimising the extraction process and increasing its effectiveness and selectivity with regard to the extraction of the target components from complex biological matrices/matrixes.

### Example 1

3.0 ml of aqueous solution of organic acids was placed into vials (8 units) having screw caps with a capacity of 11 ml. The individual content in water, C_{wat}., for each is shown in table 1. 1.5 ml of acetonitrile of the make "Sort 2" was added to each. After careful mixing, four samples were placed in a rotor of a cooled centrifuge, temperature -25 ± 1°C. It was centrifuged at 8000 rot./minute for 90 minutes. The remaining four were subjected to the EF procedure according to method [1] in the same temperature conditions. Subsequently, as the aqueous part of the sample froze, the organic transparent layer of fluid acetonitrile extract was separated by means of decanting. Its mass constituted an average of 0.12 ± 0.005 g. In the samples which were subjected in parallel to EF according to method [1], extract in the form of a separate fluid phase formed in a quantity of less than 5-10 µL, which did not allow it to be separated from the solid phase of the ice and analysed. The acid content in the extracts was determined by means of the gas chromatography method with flame ionisation detection, said extracts being produced by the proposed method for extractive freezing-out with simultaneous centrifugation. The results of the experiment are shown in table 1.

**Table 1. Results of extractive freezing-out of monobasic carboxylic acids from an aqueous solution into acetonitrile under action of centrifugal forces (n = 4, P = 0.95)**

| Item No. | Acid | Content, µg/ml | | Concentration coefficient, Cₑₓₜᵣ./C_{wat.} |
|---|---|---|---|---|
| | | In water, C_{wat.} | In extract, C_{extr.} | |
| 1 | Acetic, C₂ | 6.37 | 16 ± 1.2 | 2.5 |
| 2 | Propionic, C₃ | 6.41 | 17 ± 1.3 | 2.7 |
| 3 | Butyric, C₄ | 8.19 | 24 ± 1.9 | 2.9 |
| 4 | Valeric, C₅ | 8.31 | 26 ± 1.9 | 3.1 |
| 5 | Caproic, C₆ | 9.71 | 31 ± 2.1 | 3.2 |
| 6 | Oenanthic, C₇ | 10.10 | 34 ± 2.7 | 3.4 |
| 7 | Caprylic, C₈ | 9.26 | 31 ± 2.4 | 3.3 |

### Example 2

Samples of water with a mass of 8.5 ml, acidified to pH 3 with phosphoric acid and containing sorbic acid at a concentration of 1.9 µg/ml were placed in glass vials (8 units) having screw caps with a capacity of 11 ml. 1.5 ml acetonitrile was added of the make "Sort 2". After the vials were hermetically sealed by the screw caps (8 units), the content was mixed until it dissolved. A portion of the vials, 4 in quantity, were placed in a freezer at a temperate from - 25 ± 1 °C and the remaining ones (4 units) were placed in the rotor of the cooled centrifuge at a temperature from - 25 ± 1 °C, and subjected to centrifugation until crystallization of the aqueous part of the sample. In the vials which were cooled without centrifugation, that is, according to method [1], collection of the sample from the surface of the ice after crystallization of the aqueous part of the sample was not successful. It was fully absorbed into the solid phase. At the same time, a layer of the liquid phase of the organic solvent (extract) formed on the surface of the ice in the vials located in the cooled centrifuge, said solvent having been separated by means of decanting into a separate test tube. The results of the experiment according to extract mass and content of organic acid therein are shown in table 2.

**Table 2. Results of the freeze out extraction of sorbinic acid from an aqueous medium in acetonitrile by means of method [1] and under the action of centrifugal forces.**

| Item No. | Sample name | Experiment conditions | | | |
|---|---|---|---|---|---|
| | | EF [1] | | EF under conditions of centrifugation. | |
| | | Extract mass, g. | Acid concentration, µg/ml. | Extract mass, g. | Acid concentration, µg/ml. |
| 1 | 8.5 ml aqueous solution of sorbic acid + 1.5 ml acetonitrile | Does not form | - | 0.248 | 14.33 |
| 2 | 8.5 ml aqueous solution of sorbic acid + 1.5 ml acetonitrile | Does not form | - | 0.216 | 15.21 |
| 3 | 8.5 ml aqueous solution of sorbic acid + 1.5 ml acetonitrile | Does not form | - | 0.222 | 14.11 |
| 4 | 8.5 ml aqueous solution of sorbic acid + 1.5 ml acetonitrile | Does not form | - | 0.226 | 14.32 |

| | | | | | |
|---|---|---|---|---|---|
| Notes: - content of acid in the extract was determined by the method of high performance liquid chromatography (HPLC) with a diode-array detector - centrifugation - 6000 rotations/minute | | | | | |

The data, presented in table 2, provides evidence for the high reproducibility of the results of the experiment with regards to the quantity of mass of extract produced by the proposed method: a confidence interval for the average value is equal to 0.23 ± 0.014 (n = 4, P = 0.95). This significantly improves on the indicators of the known method of EF [1, 5] when the process is carried out at an analogous temperature interval.

### Example 3

8.5 ml of morning urine of patient B and 1.5 ml acetonitrile of the make "Sort 2" were placed into vial no. 1, said vial having a screw cap with a capacity of 11 ml. 8.5 ml of morning urine of patient B was placed into vial no. 2, said vial having a screw cap with a capacity of 11 ml, and 50 µL of salicylic acid solution in water with a concentration of 1350 µg/ml and 1.5 ml of acetonitrile of the make "Sort 2" were added. After being carefully mixed, the samples were placed in a rotor of a cooled centrifuge, temperature - 25 ± 1°C. Centrifugation at 8000 rot./minute for 120 minutes took place. After crystallisation of the aqueous parts of the samples being investigated, the fluid organic phase (extract) was collected from the surface of the ice by decanting. The mass of extract comprised: from vial no. 1 - 0.218 g, vial no. 2 - 0.224 g. As a result of the investigation using the method of high performance liquid chromatography with diode-array detection, the content of salicylic acid in the extract produced from vial no. 2 was found to be 25.2 µg/ml. Salicylic acid was not discovered in the extract from vial no. 1.

### Example 4.

9 ml of sea water from a swimming pool was placed into vials no. 1-4, said vials having screw caps with a capacity of 11 ml. 10 µL of sulphuric acid (50%) and 1 ml of acetonitrile of the make "Sort 2" were added. Into each of analogous vials no. 5-8 (4 units) having screw caps with a capacity of 11 ml, 9 ml of sea water from a swimming pool with the addition of 4 µL of organic acid C₂ - C₈ into each from a standard solution of acid in acetonitrile with the content C₂ - 656, C₃ - 660, C₄ - 844, C₅ - 856, C₆ - 1000, C₇ - 1040 and C₈ - 954 µg/ml. 10 µL of sulphuric acid (50%) and 1 ml of acetonitrile of the make "Sort 2" was added. After careful mixing, all samples were placed in a rotor of a cooled centrifuge, temperature - 25 ± 1 °C. Centrifugation at 8000 rot./minute for 120 minutes took place. After this, as the aqueous part froze, the organic transparent layer of fluid acetonitrile extract was separated by decanting. Its mass constituted on average 0.06 ± 0.003 g. The acid content in the extracts was determined using the method of gas chromatography with flame ionisation detection. The results of the experiment are shown in table 3.

**Table 3. Results of extractive freezing-out of monobasic organic acid from salt water into acetonitrile under action of centrifugal forces (n=4, P=0.95)**

| Item No. | Sample | Acid | Content, µg/cm³, in extract, Cₑₓₜᵣ | Concentration coefficient*, Cₑₓₜᵣ/C_{wat} |
|---|---|---|---|---|
| 1 | Samples 1- 4, sea water | Acetic, C₂ | 0.6 ± 0.15 | - |
| 2 | | Propionic, C₃ | Not found | - |
| 3 | | Butyric, C₄ | Not found | - |
| 4 | | Valeric, C₅ | Not found | - |
| 5 | | Caproic, C₆ | Not found | - |
| 6 | | Oenanthic, C₇ | Not found | - |
| 7 | | Caprylic, C₈ | Not found | - |
| 8 | Samples 5 - 8, sea water + addition of acid | Acetic, C₂ | 2.7 ± 0.2 | - |
| 9 | | Propionic, C₃ | 2.7 ± 0.2 | 9.3 |
| 10 | | Butyric, C₄ | 4.9 ± 0.4 | 13.0 |
| 11 | | Valeric, C₅ | 5.5 ± 0.4 | 14.5 |
| 12 | | Caproic, C₆ | 7.5 ± 0.6 | 16.9 |
| 13 | | Oenanthic, C₇ | 6.9 ± 0.6 | 14.9 |
| 14 | | Caprylic, C₈ | 5.9 ± 0.5 | 13.8 |

| | | | | |
|---|---|---|---|---|
| Notes: C_{wat} - is calculated taking into account the addition of organic acid into the sample and the establishment of its absence in sea water in the analysis of samples no. 1 - 4. | | | | |

As follows from the results produced (table 3), the concentration coefficient of the component of interest using the method proposed can reach almost 17 times (for example, in the case of capronic acid), which surpasses the possibilities of method [1] by almost four times at a similar temperature interval of extractive freezing out [5].

### Example 5.

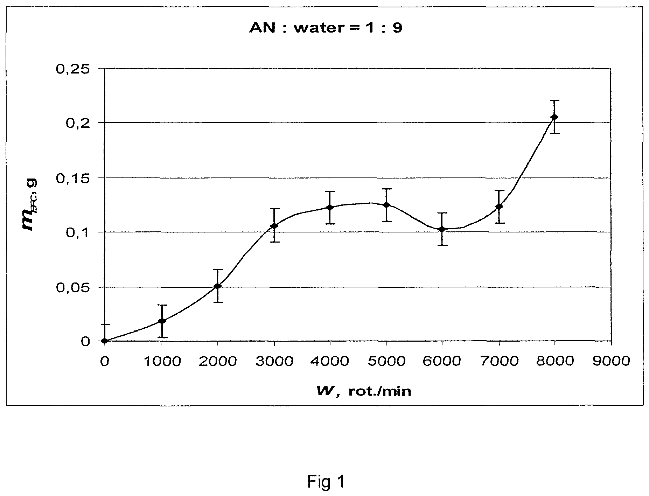

The effect of the speed of rotation of the rotor of the centrifuge or the amount of centrifugal acceleration, insofar as this is an interconnected size, on the mass of extract produced, is examined in the experiment. 9 ml of distilled water and 1 ml of acetonitrile were poured into vials having screw caps with a capacity of 11 ml. After this, the vials with the content were placed in a rotor of a centrifuge, cooled previously to a temperature of - 32 ± 2 °C. The temperature was controlled using a digital thermometer "Testo 174T" (Testo AG, Germany), located within the freezer. Subsequently, centrifugation took place for 45 min. The specified rotation speed of the rotor was controlled using a tachometer "UT372" (UNIT, Hong Kong). The observed dependence produced is shown in fig. 1.

Fig. 1. Dependence of extract mass (**m**_{EFC}), said mass being produced as a result of extractive freezing-out under action of centrifugal forces, on rotation speed of the centrifuge rotor (***W***).

During EF without centrifugation, i.e. under the condition that W = 0, the extract (acetonitrile) was fully absorbed by the ice which formed, having in this case a polycrystalline structure (with cracks). From a rotation speed of the rotor of 3000 - 4000 rot./min and higher, the frozen aqueous phase of the sample has the form of transparent monocrystalline ice. A small polycrystalline region having a quantity of frozen spherical bubbles of air and, possibly, of acetonitrile extract, remains only in its central part. The dependence shown in fig. 1 shows that, all other conditions being equal, with increasing rotor speed, i.e. with growing centrifugal force, the quantity of acetonitrile extract produced increases in sections from 0 to 3000 and from 7000 to 8000 rot./min, in the range of 3000 to 7000 rot./min, its mass stable (0.1 - 0.12 g).

### Example 6

5 ml of phenol solution in distilled water with a concentration of 2.44 µg/ml and 1 ml of 95% ethanol was placed in vials (4 units) having screw caps with a capacity of 11 ml. After careful mixing, the prepared samples were placed in a rotor of a cooled centrifuge, temperature -27 °C. Centrifugation at 4000 rot./min for 45 minutes took place. After crystallisation of the aqueous parts of the samples being investigated, the liquid organic phase (extract) was gathered from the surface of the ice by decanting. The mass of extract comprised: 0.398 g from vial 1, 0.249 g from vial 2, 0.262 g from vial 3, 0.288 g from vial 4. As a result of the investigation using the method of gas chromatography with flame ionisation detection, the phenol content in the extract produced from vial 1 was established to be: 5.07 µg/ml from vial 1, 5.48 µg/ml from vial 2, 5.18 µg/ml from vial 3, 5.30 µg/ml from vial 4.

At analogous temperature conditions, the mixtures indicated above of ethanol and aqueous phenol solution without centrifugation froze without formation of a separate liquid phase of alcohol extract.

### Example 7

4 ml of phenol solution in distilled water with a concentration of 2.29 µg/ml and 1.75 ml of freshly distilled acetylacetone were placed in vials (4 units) having screw caps with a capacity of 11 ml. After careful mixing, the samples prepared were placed into a rotor, cooled to the temperature of - 17 °C, of a centrifuge. Centrifigation at 4000 rot./min for 40 mins took place. After crystallisation of the aqueous part of the samples under investigation, the liquid organic phase (extract) was gathered from the surface of the ice by decanting. The mass of extract comprised: 0.852 g from vial 1, 0.784 g from vial 2, 0.755 g from vial 3, and 0.796 g from vial 4. As a result of the investigation using the method of gas chromatography with flame ionisation detection, the phenol content in the extract produced from vial 1 was established to be: 0.20 µg/ml from vial 1, 0.21 µg/ml from vial 2, 0.20 µg/ml from vial 3 and 0.18 µg/ml from vial 4.

### Example 8.

Samples of milk with a volume of 8 ml, prepared from dry milk powder "Test Material 0590 Pesticide Residues Milk Powder" from FAPAS, having pesticide content of certified significance by means of dissolving 0.80 ± 0.002 g in 8 ml of water, were placed in vials (4 units) having screw caps with a capacity of 11 ml. Into two of them (no. 1-2), 1 ml of acetonitrile was added to each, and into the remaining two (no. 3-4) 1 ml of α-hexachlorocyclohexane (isomer of the pesticide lindane) in acetonitrile with a concentration of 0.0678 µg/ml was added. After careful mixing, the samples prepared were placed in a rotor of a cooled centrifuge, temperature - 25 °C. Centrifugation at 4000 rot./min took place for 45 minutes. After crystallisation of the aqueous part of the samples being investigated, the transparent liquid organic phase of acetonitrile extract was gathered from the surface of the ice, dispersed milk particles all remaining in the volume of said ice, by means of decanting. The mass of extract comprised: 0.046 g from vial 1, 0.044 g from vial 2, 0.059 g from vial 3, 0.047 g from vial 4. As a result of gas chromatographic investigation of two parallel samples, the content of α-hexachlorocyclohexane was established to be 63 µg/kg in dry milk. The certified content value of this chemical compound in the given sample of dry milk according to its ID is 89.9 µg/kg.

### Example 9

Weights of finely cut peach leaves with a mass of 1.0 ± 0.02 g, treated in advance for 1 day with aqueous solution of salicylic acid, were placed in vials (4 units) having screw caps with a capacity of 11 ml. In two of them (no. 1-2), 2 ml of distilled water and 2 ml of acetonitrile were added to each, in the remaining two (no. 3-4), 2 ml of distilled water and 2 ml of salicylic acid solution in acetonitrile with a concentration of 6.215 µg/ml were added. The vials were placed in a "Heidolph" vibro-shaker for 30 minutes (speed regime 1) for extraction. Subsequently, the vials with their contents were placed in the rotor of a centrifuge cooled to - 27 °C. Centrifugation at 4000 rot./min for 45 minutes took place. After crystallisation of the aqueous part of the samples being investigated, the transparent fluid organic phase of acetonitrile extract was gathered by means of decanting from the surface of the ice, in the volume of which the whole mass of dispersed plant particles was contained. The mass of extracts comprised: 0.556 g from vial 1, 0.548 g from vial 2, 0.559 g from vial 3, 0.529 g from vial 4. As a result of the investigation, with the aid of high performance liquid chromatography with diode-array detection, the content of salicylic acid in the peach leaves, calculated by the additive method with averaging over two parallel samples, was established to be 19.34 µg/g.

### Example 10

9 ml of distilled water was placed into vials (4) having screw caps with a capacity of 11 ml, into each of which 2.5 µl of naphthalene solution in acetonitrile with a concentration of 766 µg/ml was introduced using a micro syringe MSH-10, and carefully mixed. 1 ml of ethyl acetate was then added into each using a pipette autosampler BIOHIT. After careful mixing, the mixtures, thus prepared, were placed in the rotor of a centrifuge cooled to - 26 °C. Centrifugation at 4000 rot./min for 45 minutes took place. After crystallisation of the aqueous part of the samples being investigated, the fluid organic phase of ethyl acetate (extract) was gathered from the surface of the ice by decanting. Its mass of the extract comprised: 0.093 g from vial 1, 0.078 g from vial 2, 0.082 g from vial 3, 0.087 g from vial 4. As a result of the investigation using the method of gas chromatography with flame ionisation detection, the content of naphthalene in the extracts produced was established to be: 12.5 µg/ml from vial 1, 15.0 µg/ml from vial 2, 14.4 µg/ml from vial 3, 12.9 µg/ml from vial 4.

The proposed method allows:
- a substantial increase in the degree of concentration of the target components in the extract produced in comparison with the earlier known method [1];
- a significant reduction in the quantity of extractant used in the extractive system during the procedure of extractive freezing-out;
- a high stability of mass (quantity) of extract produced in parallel experiments to be achieved;
- single-stage extraction of the target components from biological objects to be carried out;
- a reduction in material (reduced quantity of extractant required) and labour costs, insofar as with the growth in the degree of concentration of the target components in the extract produced, there is no need to repeat EF.

### Bibliography:

1. Patent of the Russian Federation No. 2303476 // Method of extracting organic substances from aqueous media by means of extraction in combination with freezing-out. // Bekhterev V. N. // B. I. no. 21, 2007.
2. Bekhterev V. N. Isolation of phenol from water by means of extractive freezing-out // Journal of Analytical Chemistry. 2008. V. 63. No. 10. P. 1045-1049
3. Bekhterev V. N. Extractive freezing-out in the analysis of organic compounds in the aqueous mediums // Mendeleev Communications. 2007. V. 17. P. 241-243
4. Bekhterev V. N. Behaviour patterns of dissolved organic substances under conditions of extractive freezing-out // Journal of Analytical Chemistry. 2011. V. 66. No. 6. P. 608-613.
5. Bekhterev V. N. Author's abstract. Diss.... Doct. chem. science - M., 2011. - 41 p.

## Claims

1. Method of extracting organic substances from aqueous media, comprising the steps of:
- adding a water-soluble organic solvent to the aqueous media comprising organic compounds,
- freezing-out of the aqueous part under the action of centrifugal force,
- extracting dissolved organic compounds in said added water-soluble organic solvent which is Isolated into a separate liquid in the freezing process in a centrifugal force field, when the aqueous part is frozen.

## Patentansprüche

1. Verfahren zum Auszug von organischen Substanzen aus einem wässrigen Medium, **gekennzeichnet durch**
folgende Schritte:
- ein wasserlösliches organisches Lösungsmittel wird zum wässrigen Medium hinzugefügt, das organische Verbindungen enthält,
- der wässrige Teil wird unter der Wirkung der Zentrifugalkraft ausgefroren,
- die gelösten organischen Verbindungen in dem genannten zugefügten wasserlöslichen organischen Lösungsmittel werden extrahiert, das in einer separaten Flüssigkeit im Gefrierprozess in einem Zentrifugalkraftfeld isoliert ist, wenn der wässrige Teil gefroren wird.

## Revendications

1. Procédé servant à l'extraction de substances organiques d'un milieu aqueux **caractérisé par** les étapes suivantes:
- Un solvant hydrosoluble organique est incorporé à un milieu aqueux contenant des composants organiques,
- La partie aqueuse est congelée sous l'action d'une force centrifuge,
- Les composants dissous organiques sont extraits dans le solvant organique hydrosoluble mentionné incorporé qui est isolé dans un liquide séparément dans le cadre du processus de congélation dans un champ de force centrifuge si la partie aqueuse fut congelée.
